# FASCICULE DE BREVET EUROPEEN

(11) **EP 0 767 084 B1**
(45) Date de publication et mention de la délivrance du brevet: **05.12.2001**
(21) Numéro de dépôt: 96402013.5
(22) Date de dépôt: 24.09.1996
(51) Int. Cl.: B60J 10/02

(54) **Vitrage de véhicule préparé pour être fixé par collage**
Gefertigte Fahrzeugscheibe zum Montieren durch Verklebung
Vehicle window glazing prepared for fixing by bonding

(30) Priorité: 07.10.1995 DE 19537436
(43) Date de publication de la demande: 09.04.1997
(73) Titulaire: SAINT-GOBAIN GLASS FRANCE, 92400 Courbevoie (FR)
(72) Inventeur: Cornils, Gerd, 52399 Merzenich-Golzheim (DE); Kötte, Rolf, Dr., 52477 Alsdorf-Begau (DE); Kleyer, Dieter, 52146 Würselen (DE)
(74) Mandataire: Muller, René

(56) Documents cités:
- EP-A- 0 256 946
- EP-A- 0 258 128
- EP-A- 0 521 825
- DE-A- 4 301 026
- DE-U- 9 003 934
- GB-A- 703 873

## Description

La présente invention concerne un vitrage prévu pour être fixé par collage, et susceptible d'être démonté, comportant un cadre profilé en un élastomère, qui présente, du côté faisant face à la surface de collage de la baie de fenêtre, une section transversale du profilé en forme de chenal, comprenant des affouillements et/ou des saillies d'ancrage pour la réception de la masse de colle qui réalise la liaison collée à la bride de collage de la baie de fenêtre et dont la liaison au cadre profilé est réalisée sans jonction adhésive, mais par ancrage mécanique par l'épousement de forme mécanique de la masse de colle durcie avec les affouillements et/ou les saillies d'ancrage du profilé en forme de chenal.

Un vitrage de ce type à installer dans un véhicule automobile est connu par le document DE-A-4 301 026. Un tel vitrage a l'avantage que, d'une part, son montage dans le véhicule automobile est réalisé conformément au procédé de collage habituel et éprouvé, et que, d'autre part, cependant, en cas de besoin, il peut être retiré du châssis de fenêtre relativement rapidement et facilement. Puisque la masse de colle et le cadre profilé n'adhèrent pas l'un à l'autre et que le cadre profilé est en un polymère souple, élastique, le vitrage peut être démonté après le durcissement de la colle en étant repoussé vers l'extérieur, les ailes du profilé en forme de chenal fléchissant et se séparant de la masse de colle durcie.

Dans le cas de véhicules automobiles, des exigences minima en matière de solidité de la liaison entre le vitrage et le châssis de fenêtre de la carrosserie sont cependant posées. Ainsi, la liaison doit par exemple être suffisament solide pour qu'en cas de télescopages, même à des vitesses élevées, les occupants du véhicule ne soient pas éjectés du véhicule à travers la baie de fenêtre avant. Les pare-brise doivent, pour cette raison, être des vitrages en verre feuilleté à résistance au transpercement élevée et leur liaison avec le châssis de fenêtre ne doit également pas céder. Cela signifie, pour des vitrages automobiles de ce type, que la résistance requise de la liaison doit être atteinte par un réglage approprié de la dureté de l'élastomère et/ou par une configuration géométrique appropriée du cadre profilé, c'est-à-dire de la section transversale du profilé en forme de chenal, ce qui est possible sans difficulté. D'autre part, la séparation recherchée du vitrage en cas de besoin en est cependant rendue sensiblement plus difficile. Certes, le démontage du vitrage peut être entrepris sans problème à l'atelier à l'aide d'outils appropriés, mais la liaison avec le châssis de fenêtre est telle qu'il n'est pas possible pour un occupant du véhicule, en cas de besoin, de repousser le vitrage à l'extérieur depuis l'intérieur du véhicule afin de se libérer lui-même du véhicule, par exemple après un accident.

EP-A-0 258 128 décrit un vitrage pourvu d'un cordon profilé en matière plastique à section transversale en U disposé dans sa zone marginale, pourvu de saillies d'ancrage formées par des affouillements. A titre d'auxiliaire de démontage, le vitrage peut intégrer un fil de déchirure noyé dans le cordon profilé, de préférence dans l'aile extérieure.

L'invention a pour but de perfectionner un vitrage de ce type, de telle sorte qu'il puisse être démonté de son châssis, sans affecter sensiblement de manière défavorable la résistance de l'assemblage, depuis l'intérieur du véhicule en cas de besoin, par exemple notamment après un accident afin de dégager une ouverture de sortie de secours, sans avoir à utiliser d'outil particulier.

A cet effet, le vitrage selon l'invention comporte des moyens pour obtenir, avant de procéder au démontage du vitrage, localement dans une partie du profilé, un ancrage réduit sur au moins un bord du creux formant chenal, de telle sorte que le processus de libération du vitrage puisse débuter sans effort dans cette partie, suivant deux variantes de réalisation détaillées ci-après.

Suivant la revendication 1, le but à la base de l'invention est atteint par le fait qu'au fond du creux formant chenal, au moins sur une partie du cadre profilé, est disposé un cordon souple, dont au moins un bout sort du côté tourné vers l'espace intérieur et peut être saisi, et à l'aide duquel l'épousement de forme mécanique existant entre le boudin de colle durci et l'aile intérieure du profilé en forme de chenal peut être séparé.

La présence d'un cordon de séparation à l'intérieur ou juste à côté d'un boudin de colle est certes en principe connue, par exemple par le document EP-0 121 480 A1, mais dans les solutions connues, le cordon de séparation sert toujours à sectionner le boudin de colle même. Des efforts considérables doivent être consentis à cet effet, et c'est pourquoi, en règle générale, des dispositifs particuliers sont nécessaires. Une libération du vitrage à l'aide du cordon de séparation par un occupant du véhicule en cas de besoin n'est pas possible, dans le cas des liaisons collées connues, de sorte que celles-ci ne peuvent pas remplir la fonction d'une fenêtre de sortie de secours.

A l'inverse des vitrages connus, le cordon souple, dans le cas du vitrage conforme à l'invention, ne sert pas à sectionner la liaison collée mais uniquement à assister le processus de libération du cadre profilé du boudin de colle durci, du fait que le cordon est arraché de manière continue entre le boudin de colle durci et l'aile intérieure du profilé en forme de chenal. Comme le cordon n'est pas noyé dans la masse de colle, aucun effort important n'est nécessaire pour séparer le cordon de la masse de colle contiguë. Les efforts pour séparer le cordon de la masse de colle peuvent être encore davantage réduits, par le fait que le cordon est pourvu d'un produit antiadhésif approprié, qui l'empêche d'adhèrer à la masse de colle.

Suivant la revendication 1, le but à la base de l'invention est aussi atteint par le fait que, dans une partie limitée localement du cadre profilé, la section du profilé est telle que l'ancrage mécanique au moyen des affouillements et/ou des saillies d'ancrage est réduit, de telle sorte que le processus de libération du vitrage puisse débuter dans cette partie sans l'intervention d'outils. Cet ancrage réduit peut résulter par exemple du fait que, dans ladite partie du cadre profilé, au moins une paroi du profilé offre une surface de glissement entre l'intérieur du chenal et le cordon de colle.

Dans cette forme de réalisation, la résistance de l'épousement de forme mécanique est affaiblie intentionnellement par le changement de forme géométrique des saillies d'ancrage et/ou des affouillements dans une région limitée localement, de préférence dans une région de coin. A cet endroit, le cadre profilé peut être assez facilement et rapidement libéré du boudin de colle durci depuis l'intérieur par une pression exercée sur la région marginale du vitrage. Lorsque le processus dé libération est amorcé de cette façon à l'endroit précité, il se poursuit relativement facilement aussi dans les régions contiguës présentant un épousement de forme mécanique supérieur, de sorte que, dans cette forme de réalisation, également, le vitrage peut être totalement libéré simplement par la force exercée par un occupant du véhicule.

Lorsque cette autre forme de moyens conforme à l'invention est utilisée dans le cas d'un pare-brise, l'affaiblissement de l'épousement de forme mécanique est réalisé de préférence dans le coin inférieur du pare-brise proche du siège du conducteur. De cette manière, on parvient à ce que, malgré l'affaiblissement local de la liaison, le pare-brise reste dans le châssis dans le cas d'un télescopage, parce que l'énergie cinétique du conducteur est amortie par l'Air Bag et ne vient pas agir sur le pare-brise.

Suivant une forme de réalisation préférée de l'invention, le cadre profilé ne présente, sur une longueur de 20 à 60 cm, ou plus particulièrement de 10 à 30 cm dans chaque direction depuis le coin du vitrage, aucune saillie d'ancrage et/ou aucun affouillement.

D'autres détails et avantages de l'invention ressortiront des revendications dépendantes et de la description suivante de différents exemples de réalisation, avec référence aux dessins annexés, dans lesquels :
la Fig. 1 est une vue d'ensemble d'un pare-brise avec un cadre profilé et un cordon placé dans le cadre profilé;
la Fig. 2 est une vue en coupe, à plus grande échelle, suivant la ligne II-II de la Fig. 1;
la Fig. 3 est une vue en coupe à plus grande échelle, dans la région marginale, du pare-brise représenté sur la Fig. 1, à l'état monté;
la Fig. 4 montre le pare-brise représenté sur la Fig. 3, au cours de la phase de libération à l'aide du cordon;
la Fig. 5 montre le pare-brise représenté sur la Fig. 3, à la fin du processus de libération;
la Fig. 6 est une vue d'ensemble d'un pare-brise avec un cadre profilé comprenant des régions de sections transversales différentes;
la Fig. 7A est une vue en coupe suivant la ligne A-A de la Fig. 6 correspondant à une première forme de réalisation pour la section transversale du profilé;
la Fig. 7B est une vue en coupe suivant la ligne B-B de la Fig. 6 correspondant à la première forme de réalisation pour la section transversale du profilé;
la Fig. 8A est une vue en coupe suivant la ligne A-A de la Fig. 6 correspondant à la deuxième forme de réalisation pour la section transversale du profilé, et
la Fig. 8B est une vue en coupe suivant la ligne B-B de la Fig. 6 correspondant à la deuxième forme de réalisation pour la section transversale du profilé.

Dans la description suivante, l'invention sera décrite par le biais d'exemples de réalisation d'un pare-brise pour véhicules automobiles. Il va de soi que l'invention peut également être utilisée pour tous les autres vitrages d'un véhicule automobile pour autant que leur fixation dans le cadre de la carrosserie du véhicule soit réalisée de la même manière. L'invention n'est pas non plus limitée à une utilisation dans des véhicules automobiles, mais peut également être d'application dans d'autres véhicules ainsi que dans le secteur du bâtiment, lorsque la possibilité d'une ouverture de sortie de secours est nécessaire.

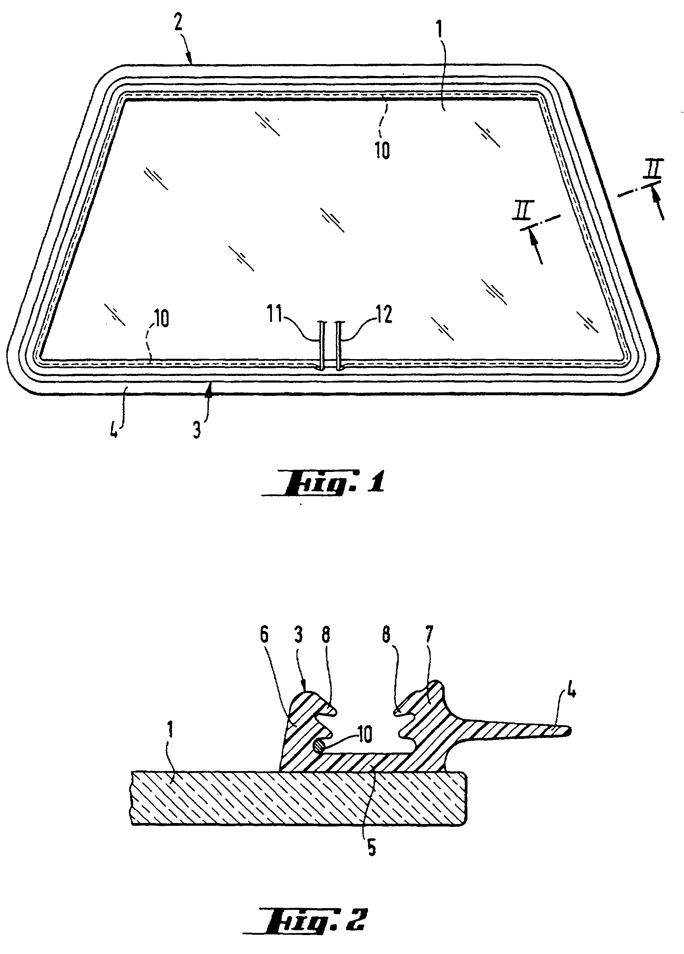

Comme le montre la Fig. 1, le vitrage 1 est pourvu tout le long de sa périphérie d'un cadre profilé 2 en un élastomère. De préférence, il s'agit d'un cadre profilé, qui a été extrudé sur la surface de la vitre à l'aide d'un procédé décrit par exemple dans le document DE 4 301 026 A1. Toute autre technique de fabrication peut néanmoins être utilisée, telle que notamment le moulage sous pression. Le vitrage 1 même est fait, dans le cas du pare-brise, d'un verre feuilleté. Il peut cependant évidemment être fait d'un verre trempé thermiquement, qualifié de verre de sécurité trempé.

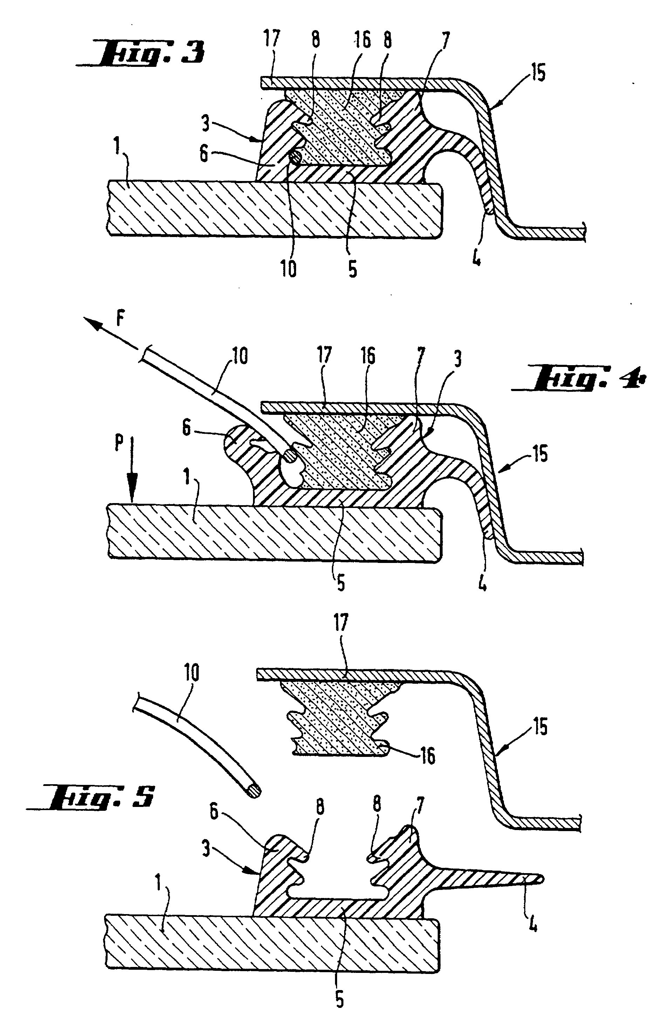

Le cadre profilé 2 présente, comme cela apparaît clairement en particulier sur les Fig. 2 à 5, un profilé 3 globalement en U et une lèvre 4 qui s'étend vers l'extérieur au-dessus du bord du vitrage. Le profilé en U 3 comporte un fond 5, une aile intérieure 6 et une aile extérieure 7, qui forment un creux du type chenal. Le creux formant chenal s'élargit vers le fond 5, et les ailes 6 et 7 présentent, pour leur part, chacune des affouillements, qui forment des saillies d'ancrage 8. Dans le creux formant chenal est disposé un cordon souple 10 et ce, le long de la ligne formée par le fond 5 et par l'aile intérieure 6, et plus précisément tout le long du cadre profilé. Les deux bouts 11, 12 du cordon 10 sont sortis du creux formant chenal du profilé 3, à un endroit approprié, de préférence en bas et au milieu du cadre profilé 2. Les bouts 11, 12 sont fixés sur le vitrage de manière appropriée jusqu'au montage du vitrage et, après le montage du vitrage, ils sont placés dans leur position définitive, dans laquelle on peut facilement les saisir en cas de besoin. En variante, le cordon 10 ne pourrait s'étendre que le long d'une partie du profilé 3.

L'installation du vitrage dans le châssis de fenêtre 15 est réalisée de manière telle que dans le creux formant chenal du profilé 3, un boudin de colle 16 est introduit à l'aide d'une buse d'injection appropriée et le vitrage ainsi préparé est installé par pression dans le châssis de fenêtre. La masse de colle 16 remplit dès lors entièrement l'espace creux formant chenal et adhère à la bride de collage 17 du châssis de fenêtre. La masse de colle 16 n'adhère ni au profilé 3, ni au cordon 10.

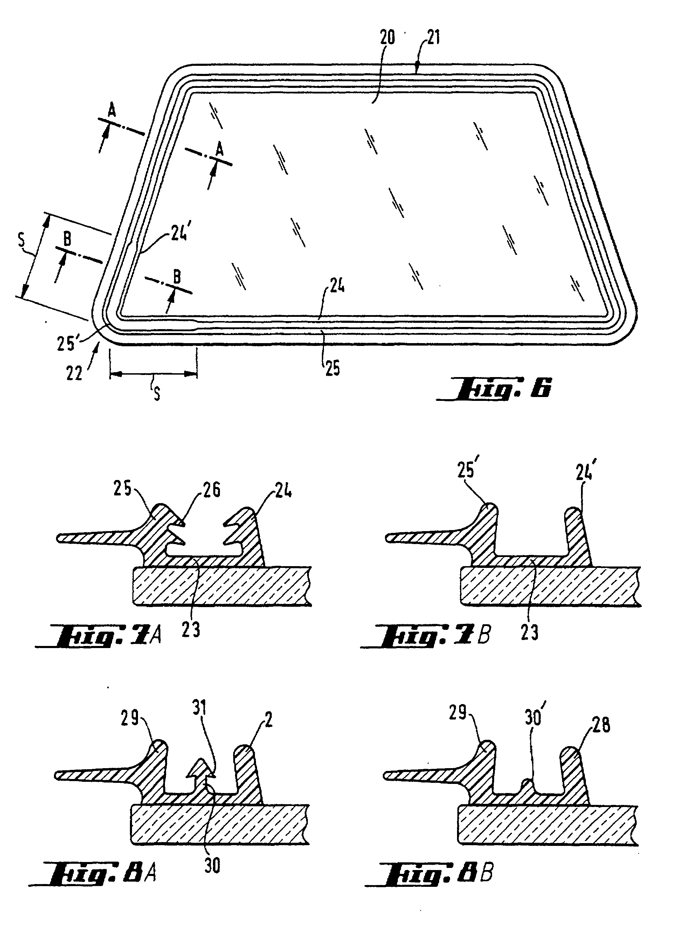

Lorsqu'en cas de besoin, le vitrage doit être repoussé au-dehors, le bout 11 du cordon est agrippé et le cordon 10 est arraché du cadre profilé 3 en tirant dans le sens de la flèche F, tandis que le vitrage 1 est en même temps repoussé hors du châssis 15 dans le sens de la flèche P. Après le démontage ainsi réalisé du vitrage 1, le vitrage est entièrement libéré du châssis de fenêtre 15, comme cela est représenté sur la Fig. 5. Au cas où, comme c'est le cas en règle générale des vitrages en verre de sécurité trempé, le vitrage 1 n'est pas brisé lors de ce démontage, ce vitrage pourvu du cadre profilé 2 peut être réinstallé dans le châssis de fenêtre. A cette fin, le boudin de colle durci auparavant 16 est enlevé de la bride de collage 17, et le chenal du profilé 3 est à nouveau rempli d'une nouvelle masse de colle.

Les solutions présentées sur les Fig. 6 à 8 reposent sur le principe que le vitrage 20 est pourvu d'un cadre profilé 21, qui peut être libéré du boudin de colle durci à l'intervention d'une force relativement faible, grâce à la forme de sa section transversale dans la région de coin 22, alors qu'il présente, dans la partie restante, une liaison relativement solide à la bride de collage du châssis de fenêtre suite à l'imbrication plus profonde entre le cadre profilé et le boudin de colle durci. La distance S, qui présente une faible imbrication, devrait mesurer dans chacune des deux directions environ 20 à 30 cm.

Pour la forme en coupe transversale du cadre profilé, diverses variantes sont en principe possibles. La Fig. 7A, par exemple, montre une forme en coupe transversale, telle qu'elle est connue et usuelle pour des vitrages de ce type. Le cadre profilé a sensiblement la même section transversale que le cadre profilé représenté sur les Fig. 2 à 5 et présente un fond 23 ainsi que deux ailes latérales 24 et 25, qui comportent sur leurs faces intérieures des saillies d'ancrage 26. Dans la région de coin 22, les ailes latérales 24' et 25' ne présentent pourtant pas de saillie d'ancrage, mais elles ont en outre sur leurs faces intérieures des parois de délimitation lisses. Par conséquent, les forces nécessaires pour libérer le vitrage dans cette région de coin 22 sont essentiellement plus faibles que dans la région du reste du cadre.

Dans le cas de la forme de réalisation du cadre profilé représentée sur les Fig. 8A et 8B, les affouillements nécessaires pour l'imbrication ne sont pas présents sur les faces intérieures des ailes latérales 28 et 29, mais ils se trouvent sur une aile centrale supplémentaire 30. Cette aile centrale 30 présente, sur son extrémité supérieure, des saillies latérales 31, qui remplissent cette fonction d'ancrage. Dans la région de coin 22, par contre, ces saillies d'ancrage 31 ne sont pas présentes sur l'aile centrale 30, comme cela apparaît sur la Fig. 8B, qui est une vue en coupe suivant la ligne B-B.

De même, les cadres profilés représentés sur les Fig. 6 à 8 sont construits de préférence par extrusion d'un polymère approprié sur le vitrage. Le changement de section transversale dans la région de coin 22 est dès lors réalisé de manière relativement simple pendant le processus d'extrusion en utilisant une buse d'extrusion dont la section transversale peut être modifiée de la manière souhaitée pendant le processus d'extrusion sur la distance S au moyen d'un curseur réglable. Une buse d'extrusion appropriée fait par exemple l'objet du document DE-B-4 031 236.

## Revendications

1. Vitrage (1, 20) prévu pour être fixé par collage, et susceptible d'être démonté, comportant un cadre profilé (2, 21) en un élastomère, qui présente, du côté faisant face à la surface de collage (17) de la baie de fenêtre, une section transversale du profilé en forme de chenal, comprenant des affouillements et/ou des saillies d'ancrage (8, 26) pour la réception de la masse de colle (16) qui réalise à liaison collée sur la bride de collage (17) de la baie de fenêtre et dont la liaison au cadre profilé (2, 21) est réalisée sans jonction adhésive, mais par ancrage mécanique par l'épousement de forme mécanique de la masse de colle durcie avec les affouillements et/ou les saillies d'ancrage, **caractérisé en ce qu'**il comporte des moyens (10; 25', 24' ; 29, 28, 30') agencés à l'interface entre le chenal du profilé (2, 21) et la masse de colle (16) pour obtenir, avant de procéder au démontage du vitrage, localement dans une partie du profilé (2, 21), un ancrage réduit sur au moins un bord du creux formant chenal, de telle sorte que le processus de libération du vitrage puisse débuter sans effort dans cette partie, ces moyens comprenant :
- ou bien un cordon souple (10) disposé, au moins sur une partie du cadre profilé (2), au fond du creux formant chenal du profilé (3) comprenant des affouillements et/ou des saillies d'ancrage (8), dont au moins un bout (11, 12) sort du côté tourné vers l'espace intérieur et peut être saisi, et à l'aide duquel l'épousement de forme mécanique existant entre le boudin de colle durci (16) et l'aile intérieure (6) du profilé (3) en forme de chenal peut être séparé ;
- ou bien, dans une partie limitée localement (22) du cadre profilé (21), une section du profilé telle que l'ancrage mécanique au moyen des affouillements et/ou des saillies d'ancrage (26) est réduit, de telle sorte que le processus de libération du vitrage puisse débuter dans cette partie (22) sans l'intervention d'outils.

2. Vitrage suivant la revendication 1, **caractérisé en ce que** ledit cordon (10) ou ladite section profilée (25', 24' ; 29, 28, 30') est agencé à l'interface entre l'aile intérieure (6, 24) du profilé (2, 21) et la masse de colle (16).

3. Vitrage suivant la revendication 1, **caractérisé en ce que** le cordon souple (10) est disposé à la base de l'aile intérieure (6) du profilé (3) en forme de chenal.

4. Vitrage suivant l'une des revendications 1 à 3, **caractérisé en ce que** le cordon souple (10) est disposé tout le long de la périphérie du vitrage.

5. Vitrage suivant la revendication 4, **caractérisé en ce que** les deux bouts (11, 12) du cordon souple (10) sortent du cadre profilé (2) vers l'intérieur et peuvent être saisis.

6. Vitrage suivant l'une quelconque des revendications 1 à 5, **caractérisé en ce que** le cordon souple (10) est pourvu d'un enrobage qui réduit ou neutralise l'adhérence à la masse de colle (16).

7. Vitrage suivant la revendication 1, **caractérisé en ce que** ladite partie limitée localement (22) du cadre profilé où la section forme un ancrage réduit, au moins une paroi (29, 30) du profilé (21) offre une surface de glissement (29, 28, 30') entre l'intérieur du chenal et le cordon de colle.

8. Vitrage suivant la revendication 1 ou 7, **caractérisé en ce que** la partie limitée localement (22) du cadre profilé (21) présentant un ancrage moindre est prévue dans le cas d'un pare-brise dans la région de coin inférieure proche du conducteur.

9. Vitrage suivant l'une des revendications 1, 7 et 8, **caractérisé en ce que** la région (22) présentant un ancrage moindre a une étendue en longueur de 20 à 60 cm.

## Patentansprüche

1. Für die Klebebefestigung vorgesehene und demontierbare Glasscheibe mit einem Profilrahmen (2, 21) aus einem Elastomer, der auf der dem Klebeflansch (17) der Fensteröffnung gegenüberliegenden Seite einen im Querschnitt kanalförmigen, mit Hinterschneidungen und/oder Verankerungsvorsprüngen (8, 26) versehenen Profilabschnitt für die Aufnahme der die Klebeverbindung zum Klebeflansch (17) der Fensteröffnung herstellenden Klebermasse (16) aufweist, deren Verbindung mit dem Profilrahmen (2, 21) ohne adhäsive Bindung durch den mechanischen Formschluß der erhärteten Klebermasse mit den Hinterschneidungen und/oder Verankerungsvorsprüngen des kanalförmigen Profilabschnitts erfolgt, **dadurch gekennzeichnet, dass** sie an der Berührungsfläche zwischen dem Kanal des Profils (2, 21) und der Klebermasse (16) angeordnete Mittel (10; 25', 24'; 29, 28, 30') zum Bewirken einer lokal in einem Abschnitt des Profils (2, 21) zumindest an einem Rand der kanalförmigen Vertiefung reduzierten Verankerung vor einem Demontieren der Glasscheibe umfasst, damit die Demontage der Glasscheibe in diesem Abschnitt ohne Anstrengung beginnen kann, wobei diese Mittel umfassen :
- eine am Boden der kanalartigen Vertiefung des mit Hinterschneidungen und/oder Verankerungsvorsprüngen (8) versehenen Profilabschnitts (3) wenigstens auf einem Teil des Profilrahmens (2) angeordnete flexible Schnur (10), von der wenigstens ein Endabschnitt (11, 12) auf der dem Innenraum zugewandten Seite herausgeführt und greifbar ist, und mit dessen Hilfe der mechanische Formschluß zwischen der erhärteten Kleberraupe (16) und dem inneren Steg (6) des kanalförmigen Profilabschnitts (3) trennbar ist,
- oder auch in einem lokal begrenzten Abschnitt (22) des Rahmenprofils (21) einen zur Verringerung der mechanischen Verankerung mittels der Hinterschneidungen und/ oder Verankerungsvorsprünge (8) gestalteten Querschnitt des Profils, wodurch in diesem Abschnitt (22) der Vorgang der Demontage der Glasscheibe ohne Werkzeugeinsatz beginnen kann.

2. Glasscheibe nach Anspruch 1, **dadurch gekennzeichnet, dass** die besagte Schnur (10) oder der besagte profilierte Querschnitt (25', 24'; 29, 28, 30') in der Berührungsfläche zwischen dem inneren Steg (6, 24) des Profils (2, 21) und der Klebermasse (16) angeordnet ist.

3. Glasscheibe nach Anspruch 1, **dadurch gekennzeichnet, dass** die flexible Schnur (10) am Fuss des kanalförmigen Profils (3) angeordnet ist.

4. Glasscheibe nach einem der Ansprüche 1 bis 3, **dadurch gekennzeichnet, dass** die flexible Schnur (10) entlang dem gesamten Scheibenumfang angeordnet ist.

5. Glasscheibe nach Anspruch 4, **dadurch gekennzeichnet, dass** beide Endabschnitte (11, 12) der flexiblen Schnur (10) innen aus dem Profilrahmen (2) herausgeführt und greifbar sind.

6. Glasscheibe nach einem der Ansprüche 1 bis 5, **dadurch gekennzeichnet, dass** die flexible Schnur (10) mit einer die Haftung zu der Klebermasse (16) herabsetzenden bzw. verhindernden Beschichtung versehen ist.

7. Glasscheibe nach Anspruch 1, **dadurch gekennzeichnet, dass** in dem besagten lokal begrenzten Abschnitt (22) des Profilrahmens (21), dessen Querschnitt eine verringerte Verankerung bildet, mindestens eine Wand (29, 30) des Profils (21) eine Gleitoberfläche (29, 28, 30') zwischen dem Inneren des Kanals und der Klebemasse bildet.

8. Glasscheibe nach Anspruch 1 oder 7, **dadurch gekennzeichnet, dass** der örtlich begrenzte Abschnitt (22) des Profilrahmens (21) mit verringerter Verankerung bei einer Windschutzscheibe in dem dem Fahrzeugführer benachbarten unteren Eckbereich vorgesehen ist.

9. Glasscheibe nach einem der Ansprüche 1, 7 oder 8, **dadurch gekennzeichnet, dass** der Bereich (22) mit verringerter Verankerung eine Längsausdehnung von 20 bis 60 cm hat.

## Claims

1. Glazing (1, 20) for fixing by adhesion and which can be dismantled, having a profiled elastomer frame (2, 21) having on the side facing the bonding surface (17) of the window opening, a cross-section of the profiled frame in the form of a channel, which is provided with anchoring cavities and/or projections (8, 26) for the reception of the adhesive mass (16) for the adhesive connection to the bonding surface (17) of the window opening and whose connection to the profiled frame (2, 21) is brought about without an adhesive junction, but instead by mechanical anchoring by the mechanical shape conformation of the hardened adhesive mass with the anchoring cavities and/or projections, **characterized in that** it has means (10; 25', 24'; 29, 28, 30') located at the interface between the channel of the profiled frame (2, 21) and the adhesive mass (16) in order to obtain, prior to the dismantling of the glazing, locally in a portion of the profiled frame (2, 21), a reduced anchoring over at least one edge of the hollow forming the channel, so that the glazing release process can start without force in said portion, said means comprising:
- either a flexible bead (10) positioned, at least on a portion of the profiled frame (2), at the bottom of the hollow forming the channel of the profile (3) having anchoring cavities and/or projections (8), whereof at least one end (11, 12) passes out of the side turned towards the internal space and which can be grasped and with the aid of which the mechanical shape conformation existing between the hardened adhesive fillet (16) and the inner wing (6) of the channel-shaped profile (3) can be separated,
- or in a locally limited portion (22) of the profiled frame (21), a cross-section of the profile such that the mechanical anchoring by the anchoring cavities and/or projections (26) is reduced, so that the glazing release process can start in said portion (22) without the intervention of tools.

2. Glazing according to claim 1, **characterized in that** said bead'(10) or said profiled section (25', 24'; 29, 28, 30') is located at the interface between the inner wing (6, 24) of the profiled frame (2, 21) and the adhesive mass (16).

3. Glazing according to claim 1, **characterized in that** the flexible bead is located at the base of the inner wing (6) of the channel-shaped profile (3).

4. Glazing according to one of the claims 1 to 3, **characterized in that** the flexible bead (10) is placed all along the periphery of the glazing.

5. Glazing according to claim 4, **characterized in that** the two ends (11, 12) of the flexible bead (10) pass out of the profiled frame (2) towards the inside and can be grasped.

6. Glazing according to any one of the claims 1 to 5, **characterized in that** the flexible bead (10) is provided with a covering reducing or neutralizing adhesion to the adhesive mass (16).

7. Glazing according to claim 1, **characterized in that** the locally limited portion (22) of the profiled frame where the cross-section forms a reduced anchoring, at least one wall (29, 30) of the profiled frame (21) offers a sliding surface (29, 28, 30') between the interior of the channel and the adhesive bead.

8. Glazing according to claim 1 or 7, **characterized in that** the locally limited portion (22) of the profiled frame (21) having a reduced anchoring is provided in the lower corner region close to the driver.

9. Glazing according to one of the claims 1, 7 and 8, **characterized in that** the region (22) having a reduced anchoring has a length extension of 20 to 60 cm.
